Europäisches Patentamt

European Patent Office

Office européen des brevets

(19)

(11) Veröffentlichungsnummer: **0 212 233**
**B1**

(12)

# EUROPÄISCHE PATENTSCHRIFT

(45) Veröffentlichungstag der Patentschrift: **19.09.90**

(51) Int. Cl.⁵: **B 29 C 43/22**

(21) Anmeldenummer: **86109579.2**

(22) Anmeldetag: **12.07.86**

(54) **Verfahren und Vorrichtung zur Steuerung der Kanten von Materialbahnen bei Doppelbandpressen.**

(30) Priorität: **29.08.85 DE 3530845**

(43) Veröffentlichungstag der Anmeldung:
**04.03.87 Patentblatt 87/10**

(45) Bekanntmachung des Hinweises auf die
Patenterteilung:
**19.09.90 Patentblatt 90/38**

(84) Benannte Vertragsstaaten:
**FR GB IT SE**

(56) Entgegenhaltungen:
**DE-A-2 610 643**
**DE-B-1 087 438**
**DE-B-1 151 423**
**US-A-2 860 841**
**US-A-4 054 251**

(73) Patentinhaber: **Held, Kurt**
**Alte Strasse 1**
**D-7218 Trossingen 2 (DE)**

(72) Erfinder: **Held, Kurt**
**Alte Strasse 1**
**D-7218 Trossingen 2 (DE)**

Courier Press, Leamington Spa, England.

EP 0 212 233 B1

## Beschreibung

Die Erfindung betrifft ein Verfahren zur Steuerung der Kanten von Materialbahnen gemäß dem Oberbegriff des Patentanspruchs 1 und eine Vorrichtung zur Durchführung dieses Verfahrens gemäß dem Oberbegriff des Patentanspruchs 5. Ein solches berfaren sowie eine dirartige Vorrichtung sind aus der DE-A-1087438 bekannt.

Doppelbandpressen werden zur Verpressung von bahnförmigen Materialien verwendet, die beharzt und vorkondensiert von Rollen in Abwikkeleinheiten vor der Doppelbandpresse kontinuierlich abgezogen, in der gewünschten Reihenfolge zusammengeführt und in die Doppelbandpresse eingeführt werden. Dort werden sie dann unter Druck und gegebenenfalls Wärmeeinwirkung zu einem kompakten Schichtstoff, dem sogenannten Laminat, ausgehärtet und unter gleichzeitiger Förderung durch die Doppelbandpresse hindurchgeführt. Es ist dabei nötig, daß die Kanten der Materialbahnen in bestimmten Positionen in die Doppelbandpresse einlaufen, damit der Kantenbeschnitt der Laminatbahn soweit wie möglich reduziert werden kann. Andererseits neigen die Kanten der einzelnen Materialbahnen dazu, durch meist ungeraden Verlauf oder von den übrigen Materialbahnen abweichenden Lauf aus der Sollage im Laufe des Betriebes auszuwandern.

Es ist bekannt, die Bahnkante so zu steuern, daß bei Abweichungen von der Sollage die Rolle, von der die Materialbahn abgezogen wird, in Gegenrichtung verstellt wird. Zur Messung der Abweichung der aktuellen Position der Bahnkante von der Sollage werden Sensoren eingesetzt, die sich direkt unterhalb der Materialbahnrolle in der Abwickeleinheit befinden, und die Position der Bahnkante nahe an der Rolle, von der sie abläuft, abtasten.

Handelt es sich bei den Materialbahnen um beharzte Papierbahnen für dekorative Schichtstofflaminate, so funktioniert diese Methode einigermaßen. Nachteilig ist jedoch, daß bei Bahnen, die keine exakt gerade Bahnkante besitzen, die Nachstellung nicht richtig funktioniert und die Bahnen noch weiter verlaufen. Bei langsam laufenden beharzten Geweben, beispielsweise mit Epoxyharz getränkten Glasfasergeweben, ist mit dieser Methode überhaupt keine Steuerung der Bahnkanten mehr möglich, da das Harz des in der Einlaufzone der Doppelbandpresse befindlichen Gewebes aufzuschmelzen beginnt. Dann verändert sich unter dem auf der Bahn lastenden Zug der ursprünglich rechtwinklige Kreuzungswinkel zwischen Kett- und Schußfaden und wird spitzwinklig, so daß die zwischen Kett- und Schußfaden eingeschlossene Fläche rautenförmig wird und somit die Bahnkante auf keinen Fall mehr geradlinig verläuft. Solche Gewebebahnen, die also eine Art fließelastischen bis plastischen Charakter besitzen, laufen dann regelmäßig aus ihrer Sollage heraus, ohne daß die Sensoren dies registrieren und die Steuerung dann eingreifen könnte. Letztendlich führt dies zu einem häufigen Stillstand der Doppelbandpresse, wobei dann die Materialbahnen wieder manuell eingerichtet werden müssen und zu einem hohen Anteil an Abfall durch den Randbeschnitt des Laminats. Geregelt wird also die Position der von der Rolle ablaufenden Kante, was jedoch zu keinem die Ausbeute maximierenden Betrieb einer Doppelbandpresse führt.

Das Problem des seitlichen Verlaufens der Bahnkante tritt auch bei anderen Bearbeitungseinrichtungen auf, bei denen Materialbahnen von Rollen kontinuierlich abgezogen werden und anschließend in die Bearbeitungseinrichtung einlaufen.

So zeigt die DE-B-1 151 423 eine Vorrichtung zum selbsttätigen Seitenregulieren von Papier- oder Kunststoffbahnen, insbesondere bei Maschinen zum Herstellen von Papiersäcken. Die Messung der Lage der Bahnkante der von einer Rolle abgezogenen Materialbahn erfolgt dort, wo es auf die Bahnkantenlage der Materialbahn ankommt. Falls die Bahnkante außerhalb des zulässigen Bereichs ist, wird ein Impuls über ein mit dem Bahnvorschub gekoppeltes Zwischenglied zur Ansteuerung der Seitenverstelleinrichtung der Rolle abgegeben.

Die DE-B-1 087 438 betrifft eine Einrichtung zur selbsttätigen Überwachung und Seitenführung von Bahnen aus Papier oder anderen Werkstoffen in Bearbeitungseinrichtungen. Der Sensor zum Feststellen der Lage der Bahnkante ist bei der Bearbeitungseinrichtung angeordnet. Wird eine Abweichung der Lage der Bahnkante festgestellt, so wird eine schrittweise Verstellung der Bahnrolle in der der Abweichung entgegengesetzten Richtung ausgelöst.

Beide Druckschriften schlagen vor, die Lage der Bahnkante der Materialbahn möglichst nahe an der Bearbeitungseinrichtung für die Materialbahn zu überwachen. Dadurch wird ein verbesserter lagerichtiger Einlauf der Materialbahn in die Bearbeitungseinrichtung erreicht. Damit trotz des Abstandes zwischen der Rolle und der Bearbeitungseinrichtung ein Nachstellen der Materialbahn erfolgt, lehrt die DE-B-1 087 438 eine incrementweise Verschiebung der Rolle. Nachteilig bei den Verfahren zur Steuerung der Bahnkanten in den beiden Druckschriften ist, daß ein lagerichtiger Einlauf der Materialbahnen in die Bearbeitungseinrichtung nur möglich ist, wenn die Bahnkante in beiden seitlichen Richtungen überwacht wird. Damit ist ein erhöhter Aufwand bei der Steuereinrichtung für die Bahnkanten erforderlich. Aufgrund der beengten Platzverhältnisse am Einlauf in die Doppelbandpresse, insbesondere bei der Vielzahl der miteinander zu verpressenden Materialbahnen, müßten diese Überwachungseinrichtungen in weiter Entfernung vom Einlauf in die Doppelbandpresse angeordnet werden, so daß ein lagerichtiger Einlauf der Materialbahnen in die Doppelbandpresse nicht gewährleistet werden könnte. Insbesondere bei Materialbahnen mit nicht geraden Kanten oder mit fließelastischem bzw, plastischem Charakter läßt sich somit eine exakte Steuerung der Bahnkanten der Materialbahnen durch die bekannten Verfahren und Vorrichtungen nicht erreichen.

Der Erfindung liegt die Aufgabe zugrunde, eine Steuerung der Bahnkanten für Materialbahnen der genannten Art so weiterzuentwikkeln, daß sie am beengten Einlaufbereich einer Doppelbandpresse eingesetzt werden kann und auch bei Bahnen mit nicht geraden Kanten oder mit fließelastischem bzw. plastischem Charakter, insbesondere bei beharzten Gewebebahnen, eine unter allen Umständen wirksame Steuerung der Bahnkante in ihre Sollage ermöglicht wird.

Die Lösung dieser Aufgabe wird durch die im Kennzeichen des Patentanspruchs 1 beschriebene technische Lehre vermittelt und eine zur Durchführung dieses Verfahrens dienende Vorrichtung wird im Kennzeichen des Patentanspruchs 5 angegeben.

Die mit der Erfindung erzielbaren Vorteile bestehen darin, daß für Materialbahnen mit nicht exakt geraden Kanten und insbesondere auch für beharzte Gewebebahnen eine exakte Steuerung der Bahnkanten möglich ist, so daß die Materialbahnen bei Einlauf in die Doppelbandpresse immer ihre exakte Sollage besitzen. Dadurch liegen die Kanten der einzelnen Materialbahnen genau übereinander, womit der in der Doppelbandpresse drucklos aushärtende Preßrand eine sehr geringe Breite besitzt. Damit wird der durch den anschließend zu besäumenden Preßrand entstehende Abfall auf ein Minimum reduziert, so daß beträchtliche Kosten am fertigen Laminat durch erhöhte Ausbeute gegenüber den bisher bekannten Verfahren eingespart werden können. Weiter vorteilhaft ist, daß die nach dem erfindungsgemäßen Verfahren arbeitende Steuerung der Bahnkanten der Materialbahnen sehr einfach aufgebaut ist und ein einziger Bahnkantensensor pro Materialbahn ausreicht. Somit läßt sich diese Steuerung auch bei Doppelbandpressen verwenden, in denen eine Vielzahl von Materialbahnen miteinander verpreßt werden.

Ein bevorzugtes Ausführungsbeispiel der Erfindung wird im folgenden näher beschrieben. Es zeigen

Fig. 1 eine produktionsanlage zur kontinuierlichen Herstellung von kupferkaschierten Elektrolaminaten,

Fig. 2 eine Doppelbandpresse schematisch in Seitenansicht,

Fig. 3 einen Schnitt entlang der Linie C-D in Fig. 2,

Fig. 4 den Bahnkantensensor in Draufsicht vergrössert,

Fig. 5 einen Schnitt durch das Führungsrohr des Bahnkantensensors,

Fig. 6 eine Prinzipskizze zur Erläuterung der Bahnkantensteuerung,

Fig. 7 einen Ausschnitt aus einer beharzten Gewebebahn in Draufsicht,

Fig. 8 eine Anordnung zum Anbringen mehrerer Bahnkantensensoren,

Fig. 9 einen als Lichtschranke ausgebildeten Bahnkantensensor,

Fig. 10 eine weitere Ausführungsform für die Gabel des Bahnkantensensors,

Fig. 11 eine Gabel des Bahnkantensensors mit V-förmigem Querschnitt und

Fig. 12 eine Gabel des Bahnkantensensors mit U-förmigem Querschnitt.

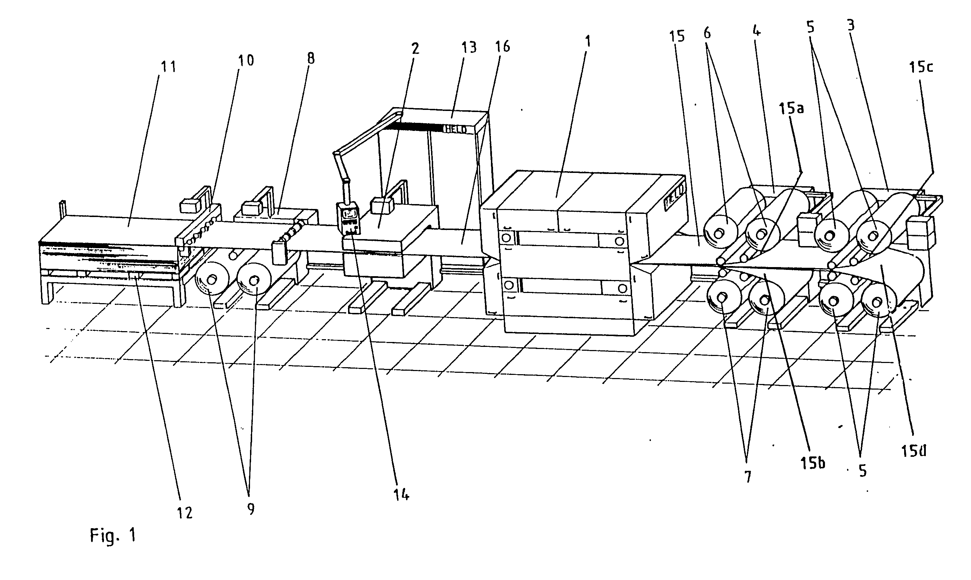

In Fig. 1 ist eine Produktionsanlage zur kontinuierlichen Herstellung von kupferkaschierten Elektrolaminaten schematisch dargestellt. Vor der Doppelbandpresse 1 befinden sich hintereinander angeordnete Abwickeleinheiten 3, 4, deren Anzahl sich nach dem Aufbau des kupferkaschierten Elektrolaminats richtet. Die Abwickeleinheit 3 trägt Rollen 5 für die mit vorkondensierten Duroplastharzen getränkten Schichtstoffbahnen, beispielsweise mit Epoxyharz getränkte Glasgewebebahnen, während die Abwickeleinheit 4 Rollen 6, 7 für die elektrolytisch abgeschiedene Kupferfolie trägt. Von den Rollen 5 werden die Schichtstoffbahnen 15c, 15d für den isolierenden Schichtstoffkern des Elektrolaminats abgezogen und mit den Kupferfolien 15a, 15b von den Rollen 6, 7 zu einem Schichtgebilde 15 zusammengeführt. Dieses aus den einzelnen Materialbahnen 15a—d bestehende Schichtgebilde 15 wird in einer Doppelbandpresse 1 unter Einwirkung von Wärme zu einer Elektrolaminatbahn 16 verpresst, die nach Verlassen der Doppelbandpresse 1 mit gleichförmiger Geschwindigkeit durch eine Kühleinrichtung 2 hindurchläuft. Falls es sich um eine flexible Elektrolaminatbahn handelt, kann diese anschliessend in einer Wikkelstation 8 auf Rollen 9 aufgewickelt werden. Alternativ kann die Elektrolaminatbahn 16 in einer Schneidestation 10 in Platten 11 aufgeteilt werden, die in Paletten 12 gestapelt werden. Die gesamte produktionsanlage wird von einem Computer in einem Schaltschrank 13 gesteuert. Die Dateneingabe durch den Benutzer erfolgt über das Terminal 14.

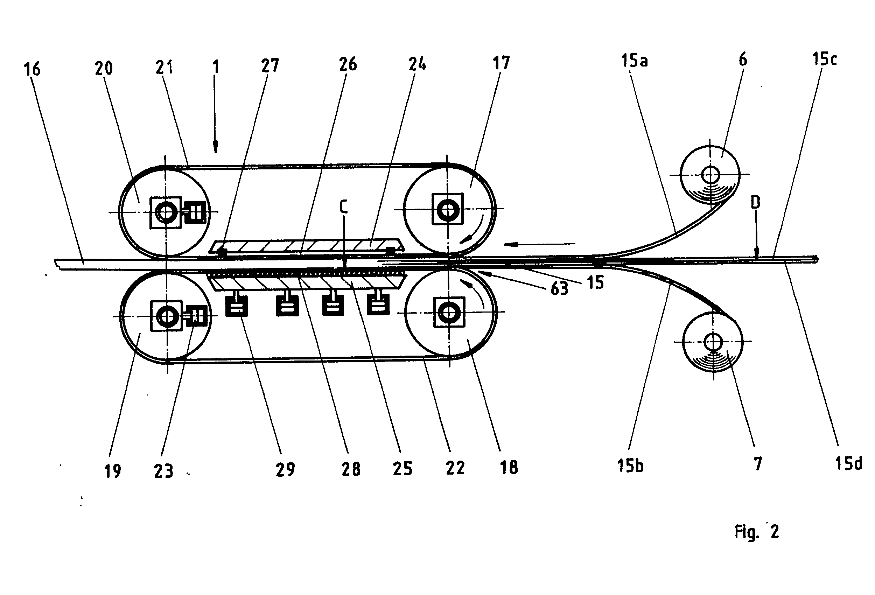

Die kontinuierlich arbeitende Doppelbandpresse 1 wird in Fig. 2 gezeigt. Sie besitzt vier in einem Pressengestell gelagerte Umlenktrommeln 17, 18, 19, 20. Das Pressengestell ist in der Zeichnung der Ubersichtlichkeit halber weggelassen. Um jeweils zwei der Umlenktrommeln, die sich entsprechend der Pfeile in den Umlenktrommeln 17 und 18 drehen, ist ein Pressband 21, 22 herumgeführt, das mittels Hydraulikzylindern 23 gespannt wird. Zwischen den pressbändern 21, 22 wird das in der Zeichnung von rechts nach links vorlaufende Schichtgebilde 15 verpresst.

Der auf das Schichtgebilde 15 ausgeübte Druck wird über Druckplatten 24, 25 hydraulisch oder mechanisch auf die Innenseiten der Pressbänder 21, 22 aufgebracht und von dort auf das Schichtgebilde 15 übertragen. Bei der hydraulischen Druckübertragung wird in dem Raum 26, der nach oben und unten von der Druckplatte 24 bzw. der Pressbandinnenseite 21 und zu den Seiten vonder Dichtung 27 begrenzt wird, ein unter Druck setzbares, fluides Druckmedium, beispielsweise Öl oder Luft, eingebracht. Zur mechanischen Druckübertragung sind zwischen der Druckplatte 25 und der Pressbandinnenseite 22 ortsfeste Rollen 28 angebracht. Mit Hilfe von Hydraulikzylindern 29 wird die Druckplatte 25 und damit die Rollen 28 gegen die Innenseite des Pressbandes 22 angestellt.

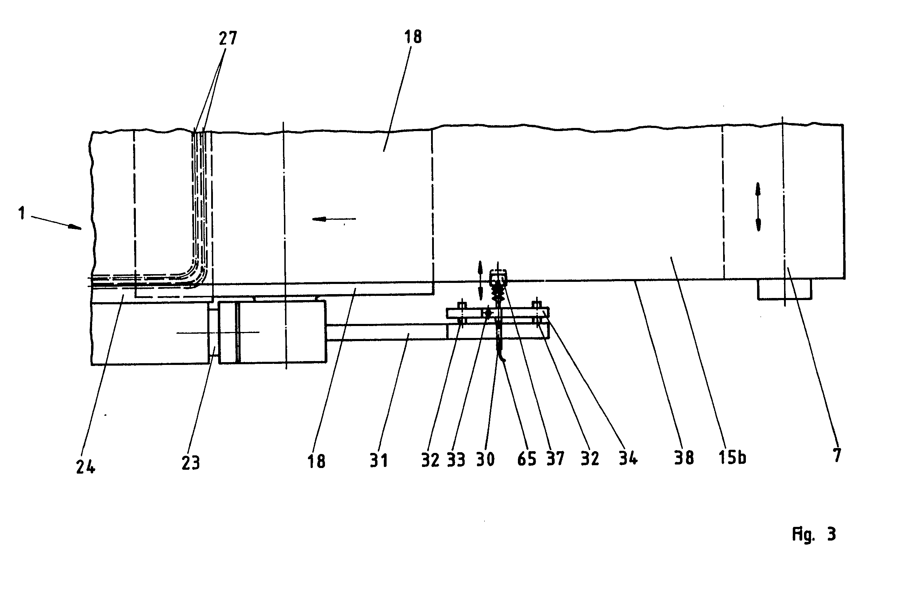

Die einzelnen Materialbahnen 15a, 15b, 15c, 15d des Schichtgebildes 15 liegen beim Einlauf in die Doppelbandpresse zwischen den Umlenktrommeln 17 und 18, in der sogenannten Einlaufzone 63, übereinander. Idealerweise sollen dabei auch die Kanten der einzelnen Materialbahnen 15a bis 15d genau übereinanderliegen. Wie insbesondere in Fig. 3 zu erkennen ist, sollten die Kanten dieser Materialbahnen mit dem druckerfüllten Raum in der Druckplatte abschliessen. Ist dies nicht der Fall, d.h. stehen einzelne der Bahnen im Schichtstoffgebilde 15 über oder sind eingerückt, so entsteht in dem Randbereich, wo diese Unregelmässigkeiten auftreten, ein teilweise drucklos ausgehärtetes und nicht masshaltiges Elektrolaminat. Dieser Randbereich, auch drucklos ausgehärteter Pressrand genannt, muss anschliessend besäumt werden und ist damit nutzloser, jedoch Kosten verursachender Abfall. Weiter ist zu befürchten, dass einzelne der überstehenden Bahnen immer weiter herauswandern und damit nicht nur den Abfall vergrössern, sondern auch einen Stillstand der Produktionsanlage und eine Neujustierung der Materialbahnen 15a bis 15d erforderlich machen.

Um ein genaues Einlaufen der einzelnen Materialbahnen 15a bis 15d in die Doppelbandpresse 1 innerhalb der Sollage zu erreichen, ist die Anlage mit einer Bahnkantensteuerung versehen, die ebenfalls in Fig. 3 für eine Materialbahn 15b zu sehen ist. Kurz vor Einlauf in die Doppelbandpresse 1 ist für jede Materialbahn 15a—d ein Bahnkantensensor 30 angebracht. Dieser Bahnkantensensor 30 sitzt rastbar eingeklemmt in einem Schlitten 34, der gleitverschieblich auf Führungsstangen 32, 33 gelagert ist, die sich wiederum in einem an der Doppelbandpresse befestigten Gestell 31 in unmittelbarer Nähe der Umlenktrommel 18, d.h. also in kürzestmöglichem Abstand von der Einlaufzone 63 befinden. Damit ist eine Justage sowohl in vertikaler als auch in horizontaler Richtung des Schlittens 34 möglich, so dass der Bahnkantensensor 30 genau auf die Sollage der Bahnkante 38 an ihrem Einlauf in die Doppelbandpresse 1 eingestellt werden kann.

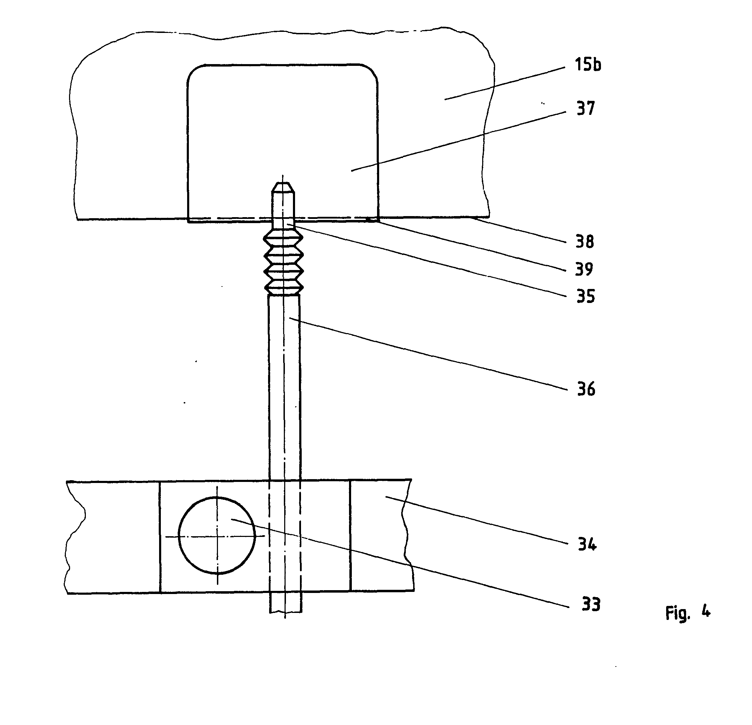

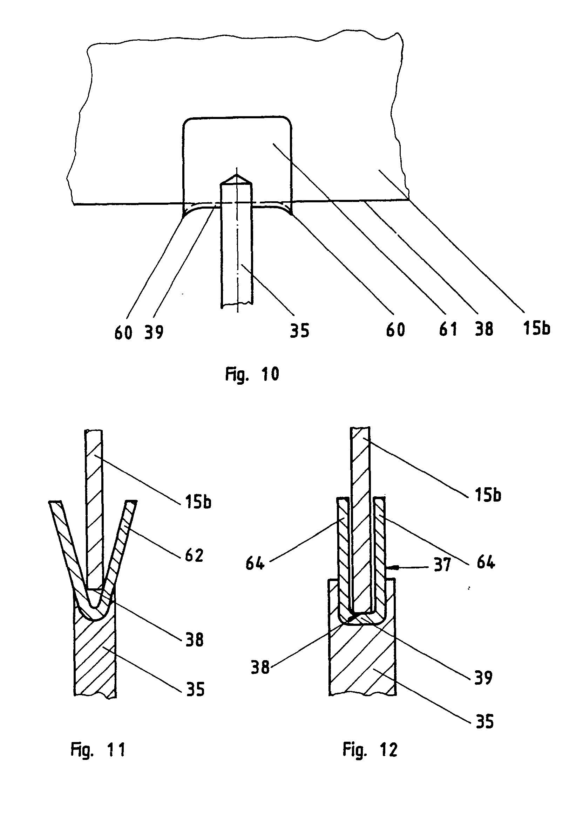

Der Bahnkantensensor 30 ist vergrössert in Fig. 4 zu sehen. Dieser Sensor besitzt einen beweglich gelagerten Lochstempel 35, dessen der Bahn 15b abgewandtes Ende in einem Führungsrohr 36 verläuft. Das Führungsrohr 36 ist fest auf dem Schlitten 34 des Gestells 31 eingeklemmt. Am anderen Ende des Lochstempels 35 sitzt eine Gabel 37, die im Querschnitt U-förmig gebogen ist, wie die Fig. 12 zeigt und mit dem Lochstempel verschweisst ist. Die Öffnung dieser Gabel 37 ist der Bahn 15b zugewandt, so dass die Bahn 15b zwischen den beiden Schenkeln 64 des U's verläuft und die Bahnkante 38 gerade die der Öffnung der Gabel 37 abgewandte gebogene Kante 39 des U's berührt.

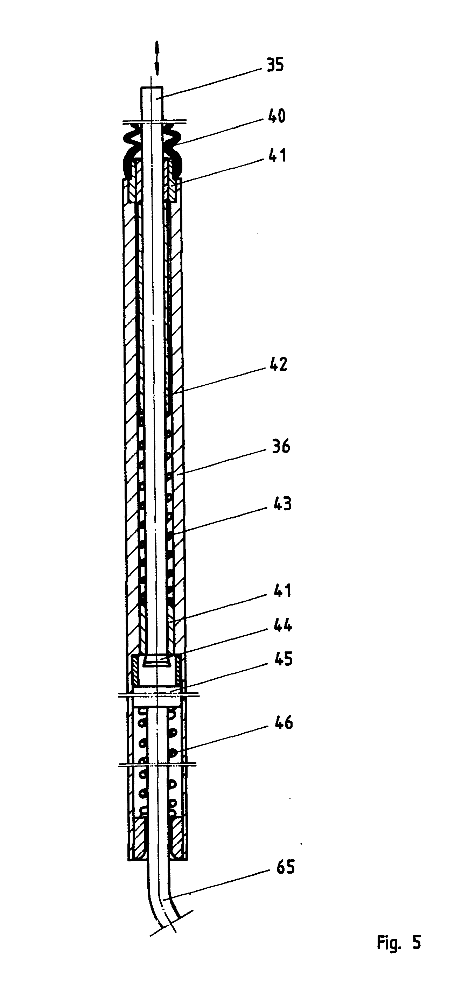

Zwischen der Gabel 37 und dem Führungsrohr 36 ist, wie in Fig. 5 gezeigt ist, am Lochstempel 35 ein Faltenbalg 40 angebracht, der verhindert, dass Schmutz in das Führungsrohr 36 eindringt. Der Lochstempel 35 ist entsprechend der Pfeilrichtung bewegbar durch Führungsbuchsen 41, die mit einem Gleitbelag versehen sind, gelagert. Mit Hilfe einer fest am Lochstempel 35 befestigten Anschlaghülse 42 wird der Lochstempel 35 mit einer Druckfeder 43 in Richtung zur Bahnkante 38 gedrückt, so dass die Bahnkante 38 gerade an der Kante 39 der Gabel 37 entlanggleitet. Anstelle der Feder 43 kann der Lochstempel 35 auch mittels Pressluft in Richtung der Bahnkante 38 gedrückt werden. Weicht die Bahnkante 38 aus ihrer Sollage aus, so wird von der Bahnkante 38 eine Kraft auf die Kante 39 der Gabel 37 ausgeübt und der Lochstempel 35 bewegt sich in Kraftrichtung entgegen der Druckkraft der Feder 43. Dadurch bewegt sich auch das der Gabel 37 abgewandte Ende 44 des Lochstempels in der entsprechenden Richtung. In der Nähe dieses Endes 44 befindet sich ein Schalter, der durch einen Näherungsinitiator 45 gebildet wird.

Der Näherungsinitiator 45 ist ein berührungslos arbeitendes Schaltelement. Er besitzt eine aktive Zone. Sobald das aus Metall bestehende Ende 44 in diese Zone eintaucht, wird im Näherungsinitiator 45 eine Spannung induziert, die ein Schalten des Näherungsinitiators 45 bewirkt. Diese Schaltspannung des Näherungsinitiators 45 wird zur Steuerung der Bahnkante 38 herangezogen und über eine Leitung 65 an den Computer im Schaltschrank 13 weitergegeben. Der Näherungsinitiator 45 wird durch eine Feder 46 in seiner Position gehalten. Sollte bei einem Ausfall der Steuerung das Ende 44 des Lochstempels 35 den Näherungsinitiator 45 berühren, so kann dieser gegen den Druck der Feder 46 ausweichen und ist vor Zerstörung geschützt.

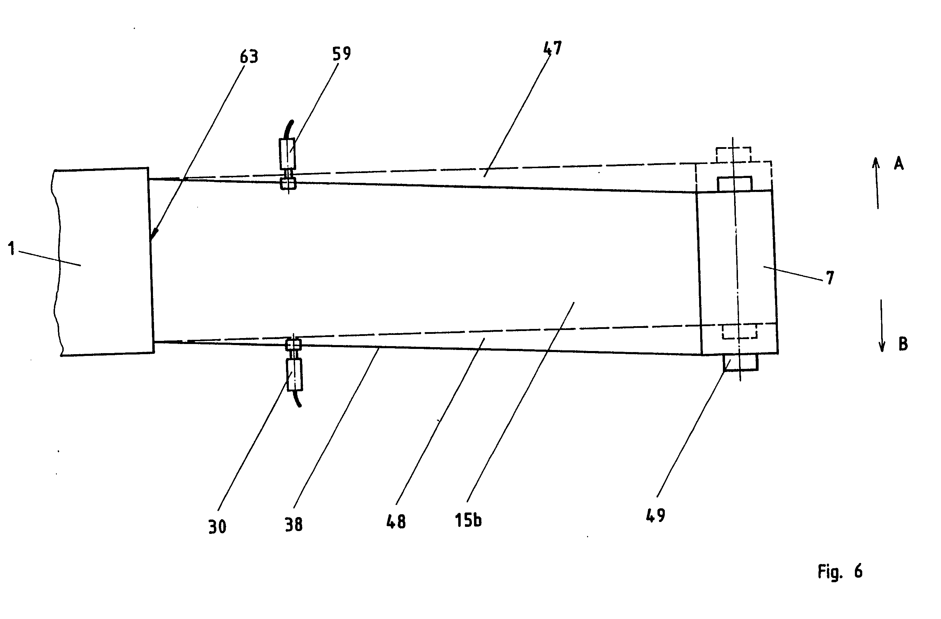

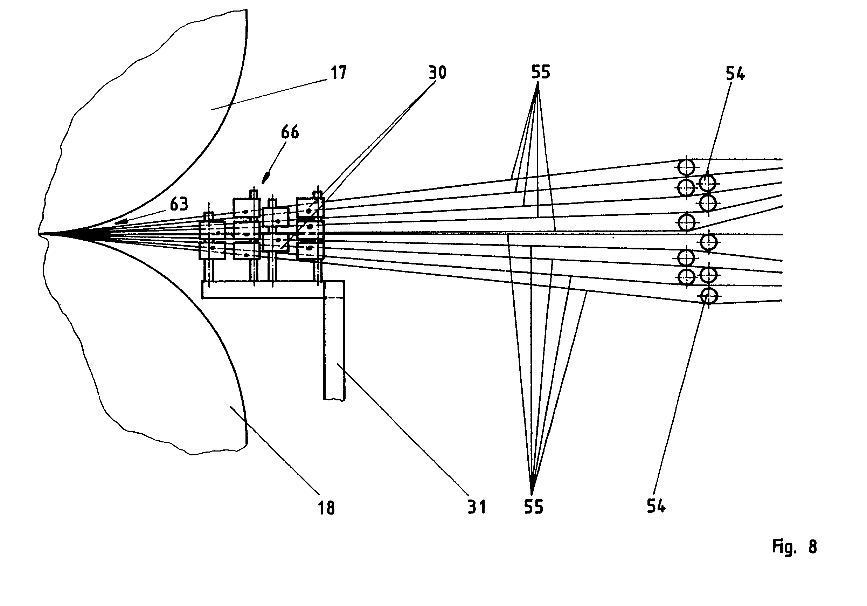

Das Verfahren zur Steuerung der Bahnkante wird mit Hilfe der Prinzipskizze in Fig. 6 erläutert. Weicht die Bahn 15b in der Nähe der Einlaufzone 63 der Doppelbandpresse 1 aus der gestrichelt gezeichneten Sollage 47 in die Abweichlage 48 ab, die in Fig. 6 mit Richtung B bezeichnet ist, so wird der Lochstempel 35 durch die Bahnkante 38 in der Gabel 37 in Richtung auf den Näherungsinitiator 45 zu bewegt, so dass dessen Ende 44 in die aktive Zone eintaucht und der Näherungsinitiator 45 einschaltet. Der die Anlage steuernde Computer stellt fest, dass der Näherungsinitiator 45 eingeschaltet ist und verstellt daraufhin die Spindel 49, die die Rolle 7 für die entsprechende Materialbahn 15b trägt, horizontal in der Bahnebene um ein Increment in Gegenrichtung, in Fig. 6 mit Richtung A bezeichnet, d.h. in Richtung vom Näherungsinitiator 45 weg. Dazu ist die Spindel 49 innerhalb der feststehenden Abwickeleinheit 4 mittels eines durch einen Elektromotor betriebenen Linearantriebs in der Bahnebene senkrecht zur Vorlaufrichtung der Materialbahn 15b beweglich. Da die Bahn 15b am Einlauf der Doppelbandpresse 1 durch den Druck praktisch fest eingespannt ist, muss sich die Bahnkante 38 ebenfalls in Richtung A bewegen, so dass sich der Lochstempel 35 auch vom Näherungsinitiator wegbewegt. Nach einer gewissen Zeitspanne überprüft der Computer, ob der Näherungsinitiator 45 noch eingeschaltet ist. Falls dies der Fall sein sollte, wird die Spindel 49 um ein weiteres Increment, also eine bestimmte Wegstrecke, in Richtung A verschoben. Dies wiederholt sich nach jeweils der gleichen Zeitspanne solange, bis der Näherungsinitiator 45 nicht mehr eingeschaltet ist. Dann wird die Spindel 49 wieder um ein Increment in Richtung B verschoben und nach einer gewissen Zeitspanne geprüft, ob der Näherungsinitiator 45 wieder eingeschaltet hat. Falls nicht wird die Verschiebung der Spindel 49 in Richtung B, d.h. auf den Näherungsinitiator zu, weiter fortgesetzt. Dies geschieht solange, bis der Näherungsinitiator 45 wieder einschaltet und die Verschiebung der Spindel erneut incrementeweise in Richtung A beginnt. Mit entsprechender Einstellung der Schaltposition des Näherungsinitiators 45 durch Justage des Schlittens 34 lässt sich so die Bahnkante 38 auf +/−1 Increment genau innerhalb der Sollage steuern. Die Zeitspanne mit der der Computer nachschaut, ob der Näherungsinitiator eingeschaltet ist, kann zweckmässigerweise im Millisekundenbereich liegen. Die Grösse des Increments mit der die Spindel 49 verstellt wird, kann in Abhängigkeit von der jeweiligen Entfernung der Abwickeleinheit und damit der Spindel 49 von der Einlaufzone 63 der Doppelbandpresse 1 und der Geschwindigkeit der Materialbahn 15b gewählt werden. Die übrigen Materialbahnen 15a, 15c, 15d erhalten ebenfalls jeweils einen eigenen Bahnkantensensor zur Steuerung der Bahnkanten in ihrer Sollage, so dass in der Nähe der Einlaufzone 63 eine aus einzelnen Bahnkantensensoren 30 bestehende Sensoranordnung 66 vorhanden ist, wie in Fig. 8 zu sehen ist. Die Verschiebung der Spindel 49 kann anstelle des Elektromotors auch mit Hilfe eines durch pressluft betätigten Kolbens erfolgen. Der Näherungsinitiator 45 arbeitet induktiv, d.h. also berührungslos und deshalb auch verschleissfrei. Es kann jedoch, falls gewünscht, anstelle des Näherungsinitiators ein beliebiger Schaltkontaktoder Ein-Aus-Schalter verwendet werden, der mittels Druckberührung durch den Lochstempel 35 schaltet.

Das Verfahren zur Steuerung der Bahnkante der Materialbahn lässt sich etwas vereinfachen, wenn ein zweiter Bahnkantensensor 59 verwendet wird. Dieser liegt dem Bahnkantensensor 30 genau gegenüber. Hat der Bahnkantensensor 30 eine Abweichung der Bahn in Richtung B signalisiert, so wird die Spindel 49 solange in Richtung A verstellt, bis der Näherungsinitiator im Bahnkantensensor 30 nicht mehr eingeschaltet ist. Wird hingegen vom zweiten Bahnkantensensor 59 eine Abweichung der Bahn in Richtung A angezeigt, so wird die Spindel 49 solange in Richtung B verstellt, bis der Näherungsinitiator im Bahnkantensensor 59 nicht mehr eingeschaltet ist.

Es ist auch möglich einen Bahnkantensensor, an dem ein Schalter mit drei Schaltstellungen angeschlossen ist, zu verwenden. Dieser Bahnkantensensor wird dann auf einer Seite der Materialbahn, beispielsweise an der Stelle, wo der Bahnkantensensor 30 sitzt, angebracht. Ist der Schalter in Stellung 1, so befindet sich die Materialbahn innerhalb der Sollage und keine Verstellung ist notwendig. Verläuft die Materialbahn in Richtung A, so wird über die Gabel 37 der Schalter in Stellung 2 gebracht und die Spindel 49 wird solange in Richtung B verschoben, bis wiederum die Schalterstellung 1 erreicht ist. Verläuft die Materialbahn in Richtung B, so ist der Schalter in Stellung 3 und die Spindel 49 wird nun solange in Richtung A verschoben, bis wiederum die Schalterstellung 1 erreicht ist.

Wie man sieht, ist das Verfahren zur Steuerung der Lage der Bahnkante bei den beiden zuletzt genannten Beispielen etwas einfacher, dafür benötigt man jedoch einen zusätzlichen Aufwand an Sensoren. Wichtig ist jedoch bei allen diesen Beispielen, dass die Sensoren so nah wie möglich bei der Einlaufzone 63 in die Doppelbandpresse 1 angebracht sind. Vorzugsweise wird dabei der Abstand der Sensoren von der Einlaufzone 63 deutlich kleiner als der halbe Abstand der der Doppelbandpresse 1 nächstgelegenen Abwickeleinheit 4 von der Einlaufzone 63 gewählt. Die hier beschriebenen Verfahren sind unter Verwendung eines Digitalrechners erläutert, jedoch kann dafür auch jede konventionelle Steuerung verwendet werden.

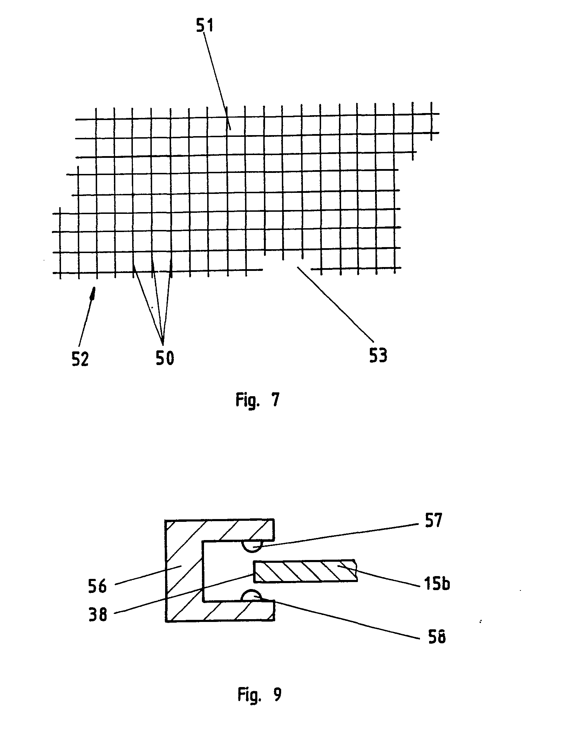

Mit dem erfindungsgemässen Verfahren und der Sensoranordnung lässt sich die Bahnkante auch besonders gut bei beharzten Glasfasergeweben, die überwiegend zur Herstellung des Schichtstoffkerns bei kupferkaschierten Elektrolaminaten verwendet werden, innerhalb der Sollage steuern. Bei diesen Glasfasergeweben 51 ist, wie in Fig. 7 gezeigt, der Schussfaden 50 sehr häufig abgekappt, womit eine sogenannte Federkante 52 entsteht. Ist diese Federkante beharzt, so lässt sich der Sensor exakt auf diese Federkante setzen und die Glasfaserbahnen können entsprechend gesteuert in die Doppelbandpresse eingefahren werden. Damit muss nach dem Verpressen nur noch die Federkante am Elektrolaminat besäumt werden, was einen Abfall von knapp 2 mm bedeutet, also sehr viel weniger als es bisher nach dem Stande der Technik möglich war, wo ein Abfall in Grössenordnungen von 10 bis 30% keine Seltenheit war.

Die beschriebene Sensoranordnung kann an der Seite des Bedieners oder vom Bediener abgewandt in der Nähe der Einlaufzone der Doppelbandpresse angebracht werden, wobei mit bedienerzugewandt die Seite der Anlage gemeint ist, auf der sich das Terminal 14 befindet, und mit bedienerabgewandt die gegenüberliegende Seite. Die bedienerzugewandte Anbringung wird jedoch bevorzugt, da es hin und wieder vorkommen kann, dass sich im Glasfasergewebe eine Fehlstelle 53 befindet. Eine solche Fehlstelle ist in Fig. 7 gezeigt. Bei einer Fehlstelle 53 ist es selbstverständlich unerwünscht, dass die Spindel 49 und damit der Einlauf der Federkante 52 in die Doppelbandpresse verstellt wird, da hier kein Verlaufen der Bahnkante aus ihrer Sollage vorliegt. In einem solchen Fall muss der Bediener manuell der Fehlstelle 53 durch den Sensor hindurchhelfen, indem er beispielsweise die Gabel 37 des Sensors festhält, damit die Steuerung für die Bahnkante nicht anspricht.

Setzt sich der Schichtstoffkern aus vielen einzelnen Materialbahnen zusammen, so liegen diese in der Nähe der Einlaufzone 63 in die Doppelbandpresse 1 sehr nahe beiander, so dass unter Umständen die Schenkel 64 der U-förmigen Gabel 37, die sich jeweils zwischen zwei Materialbahnen befinden, nicht mehr genügend Platz besitzen, um ohne Störung für die übrigen Materialbahnen angebracht werden zu können. Um dennoch die Sensoren so nah wie möglich an der Einlaufzone 63, einem durch die Vielzahl der Materialbahnen an sich unzugänglichem Ort, anbringen zu können, ist in Fig. 8 eine weitere Ausführungsform der Erfindung gezeigt. Die einzelnen Materialbahnen 55 werden zwischen der der Doppelbandpresse 1 nächstgelegenen Abwickeleinheit 4 und der Einlaufzone 63 in die Doppelbandpresse 1 mittels Rollen 54 so auseinandergezogen, dass die in der Nähe der Einlaufzone 63 angeordneten Bahnkantensensoren 30 genügend Platz in der Vertikalen besitzen, um an der jeweiligen Materialbahn angebracht werden zu können. Die Zuordnung des Bahnkantensensors 30 zur jeweiligen Materialbahn 55 ist in Fig. 8 durch einen Punkt im Sensor und auf der betreffenden Bahn angedeutet. Ein solches Auseinanderziehen der Materialbahnen 55 ist insbesondere dann erforderlich, wenn Ausführungsformen für Bahnkantensensoren verwendet werden, die in der Höhe grösser sind als die hier gezeigte Ausführungsform mit einer die Bahn 55 aufnehmenden Gabel 37. In der Regel wird man jedoch versuchen, den Bahnkantensensor so klein wie möglich zu bauen, um ein zu weites Auseinanderziehen der einzelnen Materialbahnen zu vermeiden, da andernfalls die äusseren Materialbahnen sehr frühzeitig mit den Umlenktrommeln 17, 18 in Kontakt kommen, wobei die Gefahr besteht, dass dann das Harz in den Materialbahnen teilweise drucklos aushärtet.

Wie bereits weiter oben anhand der Fig. 4 beschrieben, ist die Gabel 37 für den Bahnkantensensor 30 im Querschnitt U-förmig und besitzt in der Draufsicht eine rechteckige Fläche. Die Kante 39, entsprechend der Fig. 12, wo die beiden Schenkeln 64 des U's zusammenlaufen, kann auf der der Bahnkante 38 zugewandten Fläche mit Hartchrom beschichtet sein, um einen vorzeitigen Verschleiss dieser Kante 39 durch die daran entlanggleitende Bahnkante 38 zu verhindern. Es kann auch zweckmässig sein, die Gabel 61, wie in Fig. 10 gezeigt, so auszubilden, dass die Einund Austrittskanten 60 für die Materialbahn 15b etwas zurückgezogen sind. Damit läuft die Bahnkante 38 nicht auf eine spitze Ecke beim Durchlaufen durch die U-förmige Gabel 61 auf und eine Beschädigung dieser Bahnkante 38, beispielsweise ein Einreissen, ist dadurch ausgeschlossen. Ebenfalls zweckmässig kann es sein, wie in Fig. 11 gezeigt, den Querschnitt der Gabel 62 V-förmig auszubilden, so dass die Materialbahn 15b selbstzentrierend durch die Gabel 62 hindurchläuft.

Eine weitere Ausführungsform für den Bahnkantensensor in Form einer Lichtschranke zeigt die Fig. 9. Dieser Bahnkantensensor 56 besitzt wieder eine U-förmige Form im Querschnitt, wobei an einem Schenkel des U's sich eine Leuchtdiode 57 und vertikal darunter auf dem anderen Schenkel eine Photodiode 58 befindet. Die Materialbahn 15b wird zwischen diesen beiden Schenkeln geführt. Wandert die Kante 38 der Materialbahn aus der Sollage aus, beispielsweise in der Zeichnung in linke Richtung, so werden die von der Leuchtdiode 57 ausgesandten Lichtstrahlen unterbrochen und fallen nicht mehr auf die photodiode 58. Dadurch wird ein Signal erzeugt das der Computer mit dem weiter oben geschilderten Verfahren zur Steuerung der Bahnkante 38 benutzt.

Das Verfahren zur Steuerung der Bahnkanten und die entsprechende Sensoranordnung ist am Beispiel einer Anlage zur Herstellung kupferkaschierter Elektrolaminate erläutert. Selbstverständlich kann dieses Verfahren und die zugehörige Vorrichtung an jeder beliebigen mit einer Doppelbandpresse arbeitenden Anlage, die bahnförmige Materialien verarbeitet, insbesondere also auch an Anlagen zur kontinuierlichen Herstellung von dekorativen Laminaten, Anwendung finden.

**Patentansprüche**

1. Verfahren zur Steuerung der Kanten von Materialbahnen, die kontinuierlich von Rollen abgezogen werden und in eine Bearbeitungseinrichtung einlaufen, die Rollen in einer horizontalen Ebene senkrecht zur Vorlaufrichtung der Materialbahn verschiebbar sind, um einer Abweichung der Materialbahnkante von der Sollage entgegenzuwirken, indem die Rolle für die Materialbahn in der der Abweichung von der Sollage entgegengesetzten Richtung verschoben wird, falls eine Abweichung der Istlage der Bahnkante der Materialbahn von der Sollage in der nächstmöglichen Nähe der Einlaufzone in die Bearbeitungseinrichtung festgestellt wird, und die Verschiebung der Rolle für die Materialbahn incrementweise durchgeführt wird, wobei zwischen jeweils zwei aufeinanderfolgenden Incrementen eine feste Zeitspanne liegt, dadurch gekennzeichnet, daß es sich bei der Bearbeitungseinrichtung um eine Doppelbandpresse handelt, in der die Materialbahnen miteinander kontinuierlich zu einer Laminatbahn verpreßt werden, daß nur die Abweichung der Istlage der Bahnkante der Materialbahn von der Sollage in eine bestimmte Richtung A festgestellt wird, die incrementweise Verschiebung der Rolle für die Materialbahn in der der Abweichung von der Sollage und der Richtung A entgegengesetzten Richtung B durchgeführt wird, in der Zeitspanne zwischen jeweils zwei Incrementen überprüft wird, ob die Bahnkante der Materialbahn die Sollage erreicht hat, diese incrementweise Verschiebung solange fortgesetzt wird, wie eine Abweichung in Richtung A vorhanden ist und sobald keine Abweichung in Richtung A mehr festgestellt wird, die Rolle für die Materialbahn wieder solange incrementweise in die ursprüngliche Richtung A verschoben wird bis eine Abweichung der Istlage der Materialbahn in Richtung A festgestellt wird.

2. Verfahren nach Anspruch 1, dadurch gekennzeichnet, daß die incrementweise Verschiebung der Rolle für die Materialbahn durch einen Computer gesteuert wird, der als Eingangsgröße ein Signal für die Abweichung der Istlage der Materialbahn von der Sollage in Richtung A erhält.

3. Verfahren nach Anspruch 1 oder 2, dadurch gekennzeichnet, daß die Größe des Increments in Abhängigkeit des Abstandes der Rolle für die Materialbahn von der Einlaufzone der Doppelbandpresse gewählt wird.

4. Verfahren nach Anspruch 1, 2 oder 3, dadurch gekennzeichnet, daß die Größe des Increments in Abhängigkeit von der Geschwindigkeit der Materialbahn gewählt wird.

5. Vorrichtung zur Durchführung des Verfahrens nach einem der Ansprüche 1 bis 4, mit einer Bearbeitungseinrichtung für Materialbahnen, mindestens einer in Vorlaufrichtung der Materialbahnen gesehen vor der Bearbeitungseinrichtung angeordneten und einen gewissen Abstand zu dieser besitzenden Abwickeleinheit zur Aufnahme der in einer horizontalen Ebene senkrecht zur Vorlaufrichtung der Materialbahnen verschieblich gelagerten Rollen für die Materialbahnen und mit einer in der Nähe der Einlaufzone in die Bearbeitungseinrichtung angebrachten Sensoranordnung, die eine Abweichung der Istlage der Bahnkante der Materialbahn von der Sollage feststellt und bei Vorliegen einer Abweichung ein Signal ausgibt, das zur Steuerung der Verschiebung der Rolle für die Materialbahn in der der Abweichung entgegengesetzten Richtung dient, dadurch gekennzeichnet, daß es sich bei der Bearbeitungseinrichtung für die Materialbahnen (15a—d) um eine Doppelbandpresse (1) handelt, die Sensoranordnung (66) aus einzelnen Bahnkantensensoren (30) besteht, wobei jeder Materialbahn (15a—d) ein eigener Bahnkantensensor (30) zugeordnet ist, der Bahnkantensensor (30) eine Gabel (37) besitzt, in der die Bahnkante (38) der Materialbahn (15a—d) verläuft und die mit einem solchen Druck an der Bahnkante (38) anliegt, daß die Gabel (37) der jeweiligen Richtung der Bahnkante (38) in Abweichung von der Sollage (47) folgt und an der Gabel (37) ein mechanisches Übertragungsglied angebracht ist, das in Wirkverbindung mit einem Schalter steht und den Schalter ab einer bestimmten Stellung der Gabel (37) betätigt, so daß dieser ein elektrisches Signal abgibt.

6. Vorrichtung nach Anspruch 5, dadurch gekennzeichnet, daß die Sensoranordnung (66) mittels eines Gestells (31) in unmittelbarer Nähe der einlaufseitigen Umlenktrommeln (17, 18) der Doppelbandpresse (1) befestigt ist und jeder Bahnkantensensor (30) der Sensoranordnung (66) auf einem zur Justierung für die Sollage der Materialbahn (15a—d) in vertikaler und horizontaler Richtung auf Führungsstangen (32, 33) gleitverschieblich gelagerten Schlitten (34) angeordnet ist.

7. Vorrichtung nach Anspruch 5 oder 6, dadurch gekennzeichnet, daß die Materialbahnen (55) vor dem Einlauf in die Doppelbandpresse (1) mittels Rollen (54) in vertikaler Richtung auseinandergezogen werden, so daß an jeder Materialbahn (55) ein Bahnkantensensor (30) einer Sensoranordnung (66) ohne Störung der übrigen Materialbahnen (55) angebracht werden kann.

8. Vorrichtung nach Anspruch 5, 6 oder 7, dadurch gekennzeichnet, daß die Entfernung der Sensoranordnung (66) von der Einlaufzone (63) höchstens dem halben Abstand der der Einlaufzone (63) am nächsten angebrachten Abwickeleinheit (4) von der Einlaufzone (63) entspricht.

9. Vorrichtung nach Anspruch 8, dadurch gekennzeichnet, daß der Bahnkantensensor (30) bedienerzugewandt an der Doppelbandpresse (1) angebracht ist.

10. Vorrichtung nach Anspruch 8, dadurch gekennzeichnet, daß der Bahnkantensensor (30) bedienerabgewandt an der Doppelbandpresse (1) angebracht ist.

11. Vorrichtung nach einem der Ansprüche 5 bis 10, dadurch gekennzeichnet, daß das vom Schalter abgegebene Signal in einen Computer zur Auswertung und Ansteuerung der Verschiebung der Rolle (5, 6 oder 7) in der Abwickeleinheit (3 oder 4) übernommen wird.

12. Vorrichtung nach einem der Ansprüche 5 bis 11, dadurch gekennzeichnet, daß die Gabel (37) mittels eines durch Preßluft betätigten Kolbens an die Bahnkante (38) der Materialbahn (15a—d) angelegt wird.

13. Vorrichtung nach einem der Ansprüche 5 bis 11, dadurch gekennzeichnet, daß die Gabel (37) mittels einer Feder (43) an die Bahnkante (38) der Materialbahn (15a—d) angelegt wird.

14. Vorrichtung nach einem der Ansprüche 5 bis 13, dadurch gekennzeichnet, daß das mechanische Übertragungsglied aus einem mit der Gabel (37) verschweißten Stempel (35) besteht.

15. Vorrichtung nach einem der Ansprüche 5 bis 14, dadurch gekennzeichnet, daß der Schalter aus einem induktiv arbeitenden Näherungsinitiator (45) besteht.

16. Vorrichtung nach einem der Ansprüche 5 bis 14, dadurch gekennzeichnet, daß der Schalter aus einem Ein- und Ausschalter besteht.

17. Vorrichtung nach einem der Ansprüche 5 bis 16, dadurch gekennzeichnet, daß die Gabel (37) einen U-förmigen Querschnitt besitzt.

18. Vorrichtung nach einem der Ansprüche 5 bis 16, dadurch gekennzeichnet, daß die Gabel (62) einen V-förmigen Querschnitt besitzt.

19. Vorrichtung nach Anspruch 17 oder 18, dadurch gekennzeichnet, daß die an der Bahnkante (38) der Materialbahn (15a—d) anliegende Kante (39) der Gabel (37) hartverchromt ist.

20. Vorrichtung nach Anspruch 17, 18 oder 19, dadurch gekennzeichnet, daß die Kanten (60) der Gabel (61) an denen die Materialbahn (15a—d) ein- und austritt, etwas zurückgezogen sind.

21. Vorrichtung nach einem der Ansprüche 5 bis 20, dadurch gekennzeichnet, daß die Rolle (5, 6 oder 7) auf einer Spindel (49) in der Abwickeleinheit (3 oder 4) sitzt und die Spindel (49) mittels eines Linearantriebs mit einem Elektromotor verschiebbar ist.

22. Vorrichtung nach einem der Ansprüche 5 bis 20, dadurch gekennzeichnet, daß die Rolle (5, 6 oder 7) auf einer Spindel (49) in der Abwickeleinheit (3 oder 4) sitzt und die Spindel (49) mittels eines durch Preßluft betätigten Kolbens verschiebbar ist.

## Revendications

1. Procédé de contrôle de bords latéraux de bandes de matériaux qui sont déroulés en continu à partir de bobines et qui entrent dans un dispositif de transformation, les bobines pouvant être déplacées dans un plan horizontal perpendiculaire à la direction de déplacement de la bande de matériau, pour compenser un écart du bord de la bande de matériau par rapport à la position de consigne, en déplaçant la bobine de bande de matériau dans la direction opposée à l'écart par rapport à la position de consigne, lorsqu'un écart par rapport à la position de consigne du bord de bande est constaté le plus près possible de la zone d'entrée dans l'unité de transformation et on réalise le décalage de la bobine de bande de matériau par incrément, en ayant toujours entre deux incréments successifs un intervalle de temps fixe, caractérisé en ce que l'unité de transformation est une presse à double courroie, dans laquelle les bandes de matériau sont pressées en continu pour donner une bande de lamifié, que seule la déviation de la position réelle du bord de bande de matériau par rapport à la position de consigne est détectée dans une direction A définie, qu'on réalise le déplacement par incrément de la bobine de bande de matériau dans la direction B, opposée à A et à l'écart par rapport à la position de consigne, que dans l'intervalle de temps compris entre deux incréments successifs, on vérifie si le bord de bande de matériau a atteint la position de consigne, on poursuit ce déplacement par incrément tant qu'il subsiste un écart dans la direction A et dès qu'on ne constate plus d'écart dans la direction A, on déplace la bobine de bande de matériau à nouveau par incrément vers la direction initiale A jusqu'à ce qu'on constate un écart de la position réelle de la bande de matériau dans la direction A.

2. Procédé selon la revendication 1, caractérisé en ce que le déplacement par incrément de la bobine de bande de matériau est commandé par un ordinateur qui reçoit comme donnée d'entrée un signal d'écart de la position réelle de la bande de matériau par rapport à la position de consigne dans la direction A.

3. Procédé selon la revendication 1 ou 2, caractérisé en ce qu'on choisit l'importance de l'incrément en fonction de la distance de la bobine de bande de matériau à la zone d'entrée de la presse à double courroie.

4. Procédé selon la revendication 1, 2 ou 3, caractérisé en ce qu'on choisit l'importance de l'incrément en fonction de la vitesse de la bande de matériau.

5. Dispositif pour réaliser le procédé selon l'une des revendications 1 à 4, avec une unité de transformation de bandes de matériau, qui comprend au moins une unité de débobinage, placée en amont de l'unité de transformation et à une certaine distance d'elle, possédant des bobines déplaçables logées dans un plan horizontal perpendiculaire à la direction d'avancement, pour recevoir les bandes de matériau, avec une implantation de détecteurs placée à proximité de la zone d'entrée dans l'unité de transformation, destinée à constater un écart de la position réelle du bord de bande de matériau par rapport à la position de consigne, et qui délivre un signal en cas d'écart, servant à piloter le déplacement de la bobine de bande de matériau dans la direction opposée à celle de l'écart, caractérisé en ce que l'unité de transformation de bandes de matériau (15a—d) est une presse à double courroie (1), l'implantation de détecteurs (66) est constituée de détecteurs de bords de bande (30), à chaque détecteur de bord de bande (30) correspondant une bande de matériau (15a—d), le détecteur de bord de bande (30) a une fourchette (37) dans laquelle passe le bord de bande (38) de la bande de matériau (15a—d), et il repose sur le bord de bande (38) avec une pression telle que la fourchette (37) suit la déviation du bord de bande (38) dans toute direction par rapport à la position de consigne (47) et on associe à la fourchette (37) un dispositif mécanique de transmission qui coopère avec un commutateur et actionne le commutateur pour une position déterminée de la fourchette (37) de façon à délivrer un signal électrique.

6. Dispositif selon la revendication 5, caractérisé en ce que l'implantation (66) de détecteur est réalisée au moyen d'un support (31) à proximité immédiate des cylindres de renvoi (17, 18) côté entrée de la presse à double courroie (1), et qu'à chaque détecteur de bord de bande (30) de l'implantation de détecteurs (66) correspond un chariot (34) logé en coulissement sur des tiges de guidage (32, 33) pour régler verticalement et horizontalement la position de consigne de la bande de matériau (15a—d).

7. Dispositif selon la revendication 5 ou 6, caractérisé en ce que les bandes de matériau (55) sont décalées verticalement l'une par rapport à l'autre, au moyen de cylindres (59), de façon à ce qu'on puisse attribuer à chaque bande de matériau (55) un détecteur de bord de bande (30) d'une implantation de détecteurs (66) sans gêner les autres bandes de matériau (55).

8. Dispositif selon les revendications 5, 6 ou 7, caractérisé en ce que la distance de l'implantation de détecteur (66) à la zone d'entrée (63) correspond au plus à la moitié de la distance comprise entre la zone d'entrée (63) et l'unité de débobinage (4) la plus proche de la zone d'entrée (63).

9. Dispositif selon la revendication 8, caractérisé en ce que le détecteur de bord de bande (30) est placé du côté du conducteur de la presse à double courroie (1).

10. Dispositif selon la revendication 8, caractérisé en ce que le détecteur de bord de bande (30) est placé du côté opposé au conducteur de la presse à double courroie (1).

11. Dispositif selon l'une des revendications 5 à 10, caractérisé en ce que le signal délivré par le commutateur est reçu dans un ordinateur pour évaluer et commander le déplacement de la bobine (5, 6 ou 7) dans l'unité de débobinage (3 ou 4).

12. Dispositif selon l'une des revendications 5 à 11, caractérisé en ce qu'on appuie la fourchette (37) sur le bord (38) de la bande de matériau (15a—d) au moyen d'un vérin actionné par de l'air comprimé.

13. Dispositif selon l'une des revendications 5 à 11, caractérisé en ce qu'on appuie la fourchette (37) sur le bord (38) de la bande de matériau (15a—d) au moyen d'un ressort (43).

14. Dispositif selon l'une des revendications 5 à 13, caractérisé en ce que le dispositif de transmission mécanique est constitué d'un poinçon (35) soudé à la fourchette (37).

15. Dispositif selon l'une des revendications 5 à 14, caractérisé en ce que le commutateur est constitué d'un détecteur de proximité (45) fonctionnant par enduction.

16. Dispositif selon l'une des revendications 5 à 14, caractérisé en ce que le commutateur est constitué d'un interrupteur ouvert-fermé.

17. Dispositif selon l'une des revendications 5 à 16, caractérisé en ce que la fourchette possède une section en U.

18. Dispositif selon l'une des revendications 5 à 16, caractérisé en ce que la fourchette possède une section en V.

19. Dispositif selon la revendication 17 ou 18, caractérisé en ce que le fond (39) de la fourchette (37) qui s'appuie sur le bord (38) de bande de matériau est en chrome dur.

20. Dispositif selon la revendication 17, 18 ou 19, caractérisé en ce que les bords (60) de la fourchette (61) sur lesquels s'appuient les bandes de matériau (15a—d) à l'entrée et à la sortie, sont un peu en retrait.

21. Dispositif selon l'une des revendications 5 à 20, caractérisé en ce que la bobine (5, 6 ou 7) repose sur un mandrin (49) dans l'unité de débobinage (3 ou 4) et qu'on peut déplacer le mandrin (49) au moyen d'un entraînement linéaire par un moteur électrique.

22. Dispositif selon l'une des revendications 5 à 20, caractérisé en ce que la bobine (5, 6 ou 7) repose sur un mandrin (49) dans l'unité de débobinage (3 ou 4) et qu'on peut déplacer le mandrin (49) au moyen d'un vérin actionné par de l'air comprimé.

**Claims**

1. Method for the control of the edges of material webs which are drawn off continuously from rolls and run into a processing equipment, wherein the rolls are displaceable in an horizontal plane perpendicularly to the direction of advance of the material web in order to counteract a deviation of the material web edge from the intended position in that the roll for the material web is displaced in the direction opposite to that of the deviation from the intended position in case a deviation of the actual position of the web edge of the material web from the intended position is ascertained in the closest possible proximity of the inlet zone into the processing equipment and the displacement of the roll for the material web is performed by increments and wherein a fixed time span lies between each two successive increments, characterised thereby, that in the case of the processing equipment, there is concerned a double-belt press, in which the material webs are pressed together continuously into a laminate web, that the deviation of the actual position of the web edge of the material web from the intended position is ascertained in only one direction A, the incremental displacement of the roll for the material web is performed in the direction B opposite to the direction A and to that of the deviation from the intended position, it is tested in the time span between each two increments whether the web edge of the material web has reached the intended position, this incremental displacement is continued for as long as a deviation in direction A is present and, as soon as no deviation in direction A is any longer ascertained, the roll for the material web is again displaced incrementally in the original direction A until a deviation of the actual position of the material web in direction A is ascertained.

2. Method according to claim 1, characterised thereby, that the incremental displacement of the roll for the material web is controlled by a computer which receives a signal for the deviation of the actual position of the material web from the intended position in direction A as input magnitude.

3. Method according to claim 1 or 2, characterised thereby, that the size of the increment is chosen in dependence on the spacing of the roll for the material web from the inlet zone of the double-belt press.

4. Method according to claim 1, 2 or 3, characterised thereby, that the size of the increment is chosen in dependence on the speed of the material web.

5. Device for the performance of the method according to one of the claims 1 to 4, with a processing equipment for material webs, at least one unreeling unit, which is arranged before the processing equipment — as seen in direction of advance of the material webs — and possesses a certain spacing from this, for the reception of the rolls which are borne to be displaceable in an horizontal plane perpendicular to the direction of advance of the material webs and with a sensor arrangement, which is mounted in the proximity of the inlet zone into the processing equipment, ascertains a deviation of the actual position of the material web from the intended position and which in the presence of a deviation issues a signal which serves for the control of the displacement of the roll for the material web in the direction opposite to that of the deviation, characterised thereby, that in the case of the processing equipment for the material, webs (15a to 15d), there is concerned a double-belt press (1), the sensor arrangement (66) consists of individual web edge sensors (30), wherein an individual web edge sensor (30) is associated with each material web (15a to 15d), the web edge sensor (30) possesses a fork (37), in which the web edge (38) of the material web (15a to 15d) extends and which lies with such a pressure against the web edge (38), that the fork (37) follows the respective direction of the web edge (38) in deviation from the intended position (47) and a mechanical transmission member, which stands in effective connection with a switch and actuates the switch from a certain position of the fork (37) onwards so that this delivers an electrical signal, is mounted at the fork (37).

6. Device according to claim 5, characterised thereby, that the sensor arrangement (66) is fastened by means of a frame (31) in immediate proximity of the deflecting drums (17, 18) at the inlet end of the double-belt press (1) and each web edge sensor (30) of the sensor arrangement (66) is arranged on a carriage (34) borne to be slidable on guide rods (32, 33) for the adjustment to the intended position of the material web (15a to 15d) in vertical and horizontal direction.

7. Device according to claim 5 or 6, characterised thereby, that the material webs (55) are drawn apart in vertical direction by means of rollers (54) before the entry into the double-belt press (1) so that a web edge sensor (30) of a sensor arrangement (66) can be mounted at each material web (55) without disturbance of the remaining material webs (55).

8. Device according to claim 5, 6 or 7, characterised thereby, that the distance of the sensor arrangement (66) from the inlet zone (63) corresponds to at most half the spacing of the unreeling unit (4), which is mounted nearest to the inlet zone (63), from the inlet zone (63).

9. Device according to claim 8, characterised thereby, that the web edge sensor (30) is mounted at the double-belt press (1) to face the operator.

10. Device according to claim 8, characterised thereby, that the web edge sensor (30) is mounted at the double-belt press (1) to face away from the operator.

11. Device according to one of the claims 5 to 10, characterised thereby, that the signal delivered by the switch is taken over in a computer for evaluation and driving of the displacement of the roll (5, 6 or 7) in the unreeling unit (3 or 4).

12. Device according to one of the claims 5 to 11, characterised thereby, that the fork (37) is laid against the web edge (38) of the material web (15a to 15d) by means of a piston actuated by compressed air.

13. Device according to one of the claims 5 to 11, characterised thereby, that the fork (37) is laid against the web edge (38) of the material web (15a to 15d) by means of a spring (43).

14. Device according to one of the claims 5 to 13, characterised thereby, that the mechanical transmission member consists of a plunger (35) welded together with the fork (37).

15. Device according to one of the claims 5 to 14, characterised thereby, that the switch consists of an inductively operating proximity switch (45).

16. Device according to one of the claims 5 to 14, characterised thereby, that the switch consists of an on-off switch.

17. Device according to one of the claims 5 to 16, characterised thereby, that the fork (37) possesses a U-shaped cross-section.

18. Device according to one of the claims 5 to 16, characterised thereby, that the fork (62) possesses a V-shaped cross-section.

19. Device according to claim 17 or 18, characterised thereby, that that edge (39) of the fork (37), which lies against the web edge (38) of the material web (15a to 15d), is hard-chromium plated.

20 Device according to claim 17, 18 or 19, characterised thereby, that those edges (60) of the fork (61), at which the material web (15a to 15d) enters and issues, are retracted somewhat.

21. Device according to one of the claims 5 to 20, characterised thereby, that the roll (5, 6 or 7) sits on a spindle (49) in the unreeling unit (3 or 4) and the spindle (49) is displaceable by means of a linear drive with an electrical motor.

22. Device according to one of the claims 5 to 20, characterised thereby, that the roll (5, 6 or 7) sits on a spindle (49) in the unreeling unit (3 or 4) and the spindle (49) is displaceable by means of a piston actuated by compressed air.

Fig. 1

Fig. 2

EP 0 212 233 B1

Fig. 3

Fig. 4

Fig. 5

Fig. 6

51

52    50    53

**Fig. 7**

57

56

38

15b

58

**Fig. 9**

Fig. 8

60 39      35      60   61   38   15b

Fig. 10

15b

62

38

35

Fig. 11

64

37   64

38

39

35

Fig. 12